# EUROPEAN PATENT APPLICATION

(11) **EP 4 752 392 A1**
(43) Date of publication of application: **03.06.2026**
(21) Application number: 25217470.1
(22) Date of filing: 20.11.2025
(51) Int. Cl.: F16D 48/06

(54) **CONTROL METHOD AND DEVICE FOR ELECTRONIC PUMP, VEHICLE, AND STORAGE MEDIUM**

(30) Priority: 25.11.2024 CN 202411694176
(71) Applicant: Hycet Transmission System (Jiangsu) Co., Ltd., Zhenjiang, Jiangsu 212200 (CN)
(72) Inventor: LU, Haoyang, Zhenjiang, 212200 (CN); WANG, Mengnan, Zhenjiang, 212200 (CN); DI, Jiong, Zhenjiang, 212200 (CN); MENG, Weiyan, Zhenjiang, 212200 (CN); JIA, Peng, Zhenjiang, 212200 (CN)
(74) Representative: Murgitroyd & Company

(57) **Abstract**

A control method and device for an electronic pump includes: in a case that a vehicle speed and an engine speed satisfy a preset condition, acquiring duty cycles of the electronic pump corresponding to a plurality of target clutch pressure values at different phases of a clutch; determining a target duty cycle corresponding to each target clutch pressure value based on the duty cycles corresponding to a same target clutch pressure value at the different phases; determining a pressure duty cycle (PD) curve based on the target duty cycles corresponding to the plurality of target clutch pressure values; and adjusting the duty cycles of the electronic pump based on the PD curve and a preset clutch torque.

## Description

### TECHNICAL FIELD

The present application relates to the field of vehicle technologies, and in particular, to a control method for an electronic pump, a control device for an electronic pump, a computer-readable storage medium, and a vehicle.

### BACKGROUND

A clutch pressure-duty cycle (PD) curve represents a corresponding relationship between a clutch pressure and a duty cycle of an electronic pump. In control of a dedicated hybrid transmission (DHT), the clutch pressure is established through the electronic pump. When a target clutch torque is required, a target clutch pressure is obtained based on a clutch pressure-torque (PT) curve. The target clutch pressure is then used for determining a target duty cycle of the electronic pump based on the clutch PD curve. Under a stable voltage, the target duty cycle of the electronic pump is output to achieve an actual duty cycle of the electronic pump, thereby obtaining an actual clutch pressure (collected by a pressure sensor) and an actual clutch torque to satisfy a demand. Therefore, an accurate PD curve is particularly important, as it affects whether the clutch pressure is capable of matching with a required clutch pressure and torque, thereby significantly influencing drivability of a vehicle. However, because variations in hardware characteristics of the electronic pump and a clutch, pressure response capabilities below and above a kisspiont point are different, leading to an inaccuracy in a basic PD curve, and thus leading to a series of drivability problems.

### SUMMARY

The present application aims to solve at least one of technical problems in the related art to a certain extent. To this end, a first purpose of the present application is to propose a control method for an electronic pump, the control method includes: in a case that a vehicle speed and an engine speed satisfy a preset condition, acquiring duty cycles of the electronic pump corresponding to a plurality of target clutch pressure values at different phases of a clutch; determining a target duty cycle corresponding to each target clutch pressure value based on the duty cycles corresponding to a same target clutch pressure value at the different phases; determining a pressure duty cycle (PD) curve based on the target duty cycles corresponding to the plurality of target clutch pressure values; and adjusting the duty cycle of the electronic pump based on the PD curve and a preset clutch torque. In this way, the control method of the present application is capable of effectively solving a series of drivability problems caused by an inaccuracy in the PD curve due to hardware variations, thereby ensuring drivability to a certain extent.

A second purpose of the present application is to propose a control device for an electronic pump.

A third purpose of the present application is to propose a computer-readable storage medium.

A fourth purpose of the present application is to propose a vehicle.

To achieve the above purposes, a first aspect of the present application proposes a control method for an electronic pump. The control method includes: in a case that a vehicle speed and an engine speed satisfy a preset condition, acquiring duty cycles of the electronic pump corresponding to a plurality of target clutch pressure values at different phases of a clutch; determining a target duty cycle corresponding to each target clutch pressure value based on the duty cycles corresponding to a same target clutch pressure value at the different phases; determining a PD curve based on the target duty cycles corresponding to the plurality of target clutch pressure values; and adjusting the duty cycle of the electronic pump based on the PD curve and a preset clutch torque.

According to an embodiment of the present application, the different phases include a pressure increasing phase, where the acquiring the duty cycles of the electronic pump corresponding to the plurality of target clutch pressure values at the different phases of the clutch includes: during the pressure increasing phase, increasing the duty cycle of the electronic pump at a first preset rate, and when a difference between a current clutch pressure value and the target clutch pressure value is within a first preset threshold range, taking a duty cycle corresponding to the current clutch pressure value as the duty cycle corresponding to the target clutch pressure value.

According to an embodiment of the present application, the first preset threshold range is greater than -50 mbar and less than 50 mbar.

According to an embodiment of the present application, the different phases include a pressure decreasing phase, where the acquiring the duty cycles of the electronic pump corresponding to the plurality of target clutch pressure values at the different phases of the clutch includes: during the pressure decreasing phase, decreasing the duty cycle of the electronic pump at a second preset rate, and when the difference between the current clutch pressure value and the target clutch pressure value is within a second preset threshold range, taking the duty cycle corresponding to the current clutch pressure value as the duty cycle corresponding to the target clutch pressure value.

According to an embodiment of the present application, the second preset threshold range is greater than -50 mbar and less than 50 mbar.

According to an embodiment of the present application, the control method also includes: during the pressure increasing phase, if the current clutch pressure value reaches a preset maximum pressure value, stopping increasing the duty cycle of the electronic pump.

According to an embodiment of the present application, the control method also includes: after stopping increasing the duty cycle of the electronic pump, maintaining a current duty cycle of the electronic pump for a first period of time to stabilize the clutch pressure value, and then entering the pressure decreasing phase.

According to an embodiment of the present application, the determining the PD curve based on the target duty cycles corresponding to the plurality of target clutch pressure values includes: acquiring an average value of the duty cycle corresponding to each target clutch pressure value during the pressure increasing phase and the duty cycle corresponding to each target clutch pressure value during the pressure decreasing phase; taking the average value as the target duty cycle corresponding to the current target clutch pressure value; and determining the PD curve based on corresponding relationships between the plurality of target clutch pressure values and the corresponding target duty cycles.

According to an embodiment of the present application, the control method also includes: before entering the pressure increasing phase, controlling the duty cycle of the electronic pump to increase from a first preset duty cycle at a third preset rate; and in a case that the clutch pressure value is less than a preset pressure threshold, controlling the duty cycle of the electronic pump to decrease to a second preset duty cycle at a fourth preset rate.

According to an embodiment of the present application, the control method also includes: during the pressure increasing phase, acquiring a rising rate of the clutch pressure value; and adjusting the first preset rate when the rising rate is not within a first preset rate range.

According to an embodiment of the present application, the control method also includes: during the pressure decreasing phase, acquiring a falling rate of the clutch pressure value; and adjusting the second preset rate when the falling rate is not within a second preset rate range.

According to an embodiment of the present application, the control method also includes: in a case that the vehicle speed is equal to a preset speed threshold and the engine speed is equal to a preset speed threshold, determining that the vehicle speed and the engine speed satisfy the preset condition, and where the preset speed threshold is zero.

According to an embodiment of the present application, the control method also includes: after obtaining the target duty cycles corresponding to the plurality of target clutch pressure values, determining whether the target duty cycle corresponding to each target clutch pressure value is within a reasonable range of a hardware; and if the target duty cycle corresponding to each target clutch pressure value is within the reasonable range of the hardware, determining the PD curve the based on a relationship between the plurality of target clutch pressure values and the corresponding target duty cycles.

To achieve the above purposes, a second aspect of the present application proposes a control device for an electronic pump. The control device includes: an acquisition module, configured to acquire duty cycles of the electronic pump corresponding to a plurality of target clutch pressure values at different phases of a clutch when a vehicle speed and an engine speed satisfy a preset condition; a first determination module, configured to determine a target duty cycle corresponding to each target clutch pressure value based on the duty cycles corresponding to a same target clutch pressure value at the different phases; a second determination module, configured to determine a PD curve based on the target duty cycle corresponding to the plurality of target clutch pressure values; and a control module, configured to adjust the duty cycle of the electronic pump based on the PD curve and a preset clutch torque.

To achieve the above purposes, a third aspect of the present application proposes a computer-readable storage medium storing a control program for an electronic pump. When the control program for the electronic pump is executed by a processor, the aforementioned control method for the electronic pump is implemented.

To achieve the above purposes, a fourth aspect of the present application proposes a vehicle. The vehicle includes a memory, a processor, and a control program for an electronic pump stored in the memory and executable on the processor. When the control program for the electronic pump is executed by the processor, the aforementioned control method for the electronic pump is implemented.

According to a control method and a device for an electronic pump, a vehicle, and a storage medium provided by embodiments of the present application, in a case that a vehicle speed and an engine speed satisfy a preset condition, duty cycles of the electronic pump corresponding to a plurality of target clutch pressure values at different phases of a clutch are acquired; a target duty cycle corresponding to each target clutch pressure value based on the duty cycles corresponding to a same target clutch pressure value at the different phases is determined; a PD curve based on the target duty cycle corresponding to the plurality of target clutch pressure values is determined; and the duty cycle of the electronic pump based on the PD curve and a preset clutch torque is adjusted. In this way, the control method of the present application is capable of effectively solving a series of drivability problems caused by inaccuracies in the PD curve due to hardware variations, thereby ensuring drivability to a certain extent.

### BRIEF DESCRIPTION OF THE DRAWINGS

FIG. 1 is a flowchart of a control method for an electronic pump provided by some embodiments of the present application.
FIG. 2 is another flowchart of a control method for an electronic pump provided by some other embodiments of the present application;
FIG. 3 is a logic diagram of a control method for an electronic pump provided by some embodiments of the present application;
FIG. 4 is a block diagram of a control device for an electronic pump provided by some embodiments of the present application;
FIG. 5 is a block diagram of a vehicle provided by some embodiments of the present application.

### DETAILED DESCRIPTION OF THE EMBODIMENTS

Embodiments of the present application are described in detail below, and examples of the embodiments are shown in drawings. Throughout the specification, a same or similar reference numeral denotes a same or similar element or an element with a same or similar function. The embodiments described below with reference to the drawings are exemplary and are intended to explain the present application, but should not be construed as limiting the present application.

A control method and a device for an electronic pump, a vehicle and a storage media in the embodiments of the present application are described in detail below with reference to the drawings.

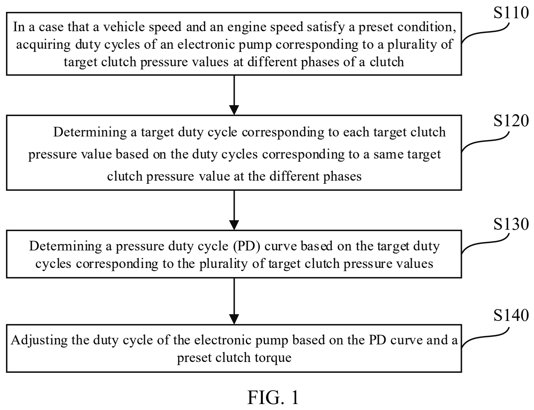

FIG. 1 is a flowchart of a control method for an electronic pump provided by some embodiments of the present application. With reference to FIG. 1, the control method for the electronic pump in the embodiments of the present application may include following steps:
S110: in a case that a vehicle speed and an engine speed satisfy a preset condition, acquiring duty cycles of the electronic pump corresponding to a plurality of target clutch pressure values at different phases of a clutch.

Specifically, a clutch pressure is increased and decreased by controlling the duty cycle of the electronic pump. For example, the clutch pressure is increased by controlling the duty cycle of the electronic pump to increase, and the clutch pressure is decreased by controlling the duty cycle of the electronic pump to decrease.

When a driving mode is a pure electric driving mode and it is detected that the vehicle speed and the engine speed satisfy the preset condition, for example, when both the vehicle speed and the engine speed are zero, the clutch pressure is gradually increased by increasing the duty cycle of the electronic pump (during a pressure increasing phase of the clutch), and a pressure sensor is used for detecting a clutch pressure value in real time. When it is detected that a current clutch pressure value reaches the target clutch pressure value, a duty cycle measurement device is used for detecting and acquiring the corresponding duty cycle. This process is repeated to acquire the duty cycles corresponding to the plurality of target clutch pressure values when the clutch is in the pressure increasing phase. Similarly, the clutch pressure is gradually decreased by decreasing the duty cycle of the electronic pump (during a pressure decreasing phase of the clutch), and the pressure sensor is used for detecting the clutch pressure value in real time. When it is detected that the current clutch pressure value reaches the target clutch pressure value, the duty cycle measurement device is used for detecting and acquiring the corresponding duty cycle. This process is repeated to acquire the duty cycles corresponding to the plurality of target clutch pressure value when the clutch is in the pressure decreasing phase. It should be noted that, during a process of acquiring the duty cycles corresponding to the plurality of target clutch pressure values at the different phases of the clutch, a status of a vehicle, such as the engine speed and the clutch pressure value, should be monitored in real time. If any fluctuations occur, the process is automatically exited, thereby ensuring accuracy of the PD curve to a certain extent.

Exemplarily, assuming that the plurality of target clutch pressure values include a target clutch pressure value 1, a target clutch pressure value 2, ···, and a target clutch pressure value n, and the target clutch pressure value 1 < the target clutch pressure value 2 < ··· < the target clutch pressure value n. It should be noted that the target clutch pressure value may be calibrated according to actual conditions, which is not limited herein.

When the clutch is in the pressure increasing phase, the pressure sensor detects that the current clutch pressure value rises to a target clutch pressure value 1, a target clutch pressure value 2, ···, and a target clutch pressure value n in sequence. When it is detected that the current clutch pressure value is the target clutch pressure value 1, a duty cycle 1 is acquired, when it is detected that the current clutch pressure value is the target clutch pressure value 2, a duty cycle 2 is acquired, ···, and when it is detected that the current clutch pressure value is the target clutch pressure value n, the duty cycle n is acquired. In this way, the duty cycles corresponding to the plurality of target clutch pressure values are acquired when the clutch is in the pressure increasing phase.

When the clutch is in the pressure decreasing phase, the pressure sensor detects that the current clutch pressure value decreases to the target clutch pressure value n, the target clutch pressure value n-1, ···, and the target clutch pressure value 1 in sequence. When it is detected that the current clutch pressure value is the target clutch pressure value n, a duty cycle n' is acquired, when it is detected that the current clutch pressure value is the target clutch pressure value n-1, a duty cycle n-1' is acquired,···, and when it is detected that the current clutch pressure value is the target clutch pressure value 1, a duty cycle 1' is acquired. In this way, the duty cycles corresponding to the plurality of target clutch pressure values are acquired when the clutch is in the pressure decreasing phase.

It should be noted that the vehicle speed may be detected and acquired via a vehicle speed sensor located close to a wheel, and the engine speed may be detected and acquired via an engine speed sensor. Specific acquiring methods are not limited herein.

S120: determining a target duty cycle corresponding to each target clutch pressure value based on the duty cycles corresponding to a same target clutch pressure value at the different phases.

Specifically, due to there is a hysteresis phenomenon in the increase and decrease of the clutch pressure, using the duty cycle corresponding to the target clutch pressure value during either the pressure increasing phase or the pressure decreasing phase alone as the target duty cycle will result in deviations. Therefore, the target duty cycle corresponding to each target clutch pressure value is determined based on the duty cycles corresponding to the same target clutch pressure value at the different phases (such as the pressure increasing phase and the pressure decreasing phase), so that the deviations caused by the hysteresis phenomenon during the increase and decrease of the clutch pressure may be avoided to a certain extent. According to the above embodiments, the duty cycles corresponding to each target clutch pressure value during the pressure increasing phase and the duty cycle corresponding to each target clutch pressure value during the pressure decreasing phase may be determined. Based on the duty cycle corresponding to the target clutch pressure value during the pressure increasing phase and the duty cycle corresponding to the target clutch pressure value during the pressure decreasing phase, the target duty cycle corresponding to the target clutch pressure value may be determined. For example, an average of the duty cycle corresponding to the target clutch pressure value during the pressure increasing phase and the duty cycle corresponding to the target clutch pressure value during the pressure decreasing phase is taken as the target duty cycle corresponding to the target clutch pressure value.

Exemplarily, when the clutch is in the pressure increasing phase, the target clutch pressure value 1 corresponds to the duty cycle 1, the target clutch pressure value 2 corresponds to the duty cycle 2, ···, and the target clutch pressure value n corresponds to the duty cycle n. When the clutch is in the pressure decreasing phase, the target clutch pressure value 1 corresponds to the duty cycle 1', the target clutch pressure value 2 corresponds to the duty cycle 2',···, and the target clutch pressure value n corresponds to the duty cycle n'. Then, based on the duty cycle 1 and the duty cycle 1', a target duty cycle 1 corresponding to the target clutch pressure value 1 may be determined, based on the duty cycle 2 and the duty cycle 2', a target duty cycle 2 corresponding to the target clutch pressure value 2 may be determined,···, and based on the duty cycle n and the duty cycle n', a target duty cycle n corresponding to the target clutch pressure value n may be determined.

S130: determining a PD curve based on the target duty cycles corresponding to the plurality of target clutch pressure values.

Specifically, according to the above embodiments, the target duty cycles corresponding to different target clutch pressure values may be determined. By performing curve fitting on these data, so that a mapping relationship between different target clutch pressure values and the target duty cycles may be obtained, that is, the PD curve may be obtained.

S140, adjusting the duty cycle of the electronic pump based on the PD curve and a preset clutch torque.

Specifically, based on the preset clutch torque, the target clutch pressure value corresponding to the preset clutch torque may be determined by querying a PT curve, where the PT curve refers to a corresponding relationship between a clutch torque and the clutch pressure value. Based on the target clutch pressure value, the target duty cycle corresponding to the target clutch pressure value may be determined by querying the PD curve, and the duty cycle of the electronic pump is adjusted based on the target duty cycle, so as to control the electronic pump.

In this way, the control method of the present application is capable of effectively solving the series of drivability problems caused by the inaccuracies in the PD curve due to the hardware variations, thereby ensuring the drivability to a certain extent.

In some embodiments, the different phases include the pressure increasing phase and the pressure decreasing phase. The acquiring the duty cycles of the electronic pump corresponding to the plurality of target clutch pressure values at the different phases of the clutch includes: during the pressure increasing phase, increasing the duty cycle of the electronic pump at a first preset rate, and when a difference between the current clutch pressure value and the target clutch pressure value is within a first preset threshold range, taking a duty cycle corresponding to the current clutch pressure value as the duty cycle corresponding to the target clutch pressure value; and during the pressure decreasing phase, decreasing the duty cycle of the electronic pump at a second preset rate, and when the difference between the current clutch pressure value and the target clutch pressure value is within a second preset threshold range, taking the duty cycle corresponding to the current clutch pressure value as the duty cycle corresponding to the target clutch pressure value. Among them, the first preset rate, the first preset threshold range, the second preset rate, and the second preset threshold range may be calibrated according to actual conditions, which are not limited specifically herein.

Specifically, during the pressure increasing phase, the duty cycle of the electronic pump is increased at the first preset rate, the current clutch pressure value is detected in real time via the pressure sensor, and the difference between the current clutch pressure value and the target clutch pressure value is acquired. When the difference is within the first preset threshold range, for example, the difference is greater than -50 mbar and less than 50 mbar, the duty cycle measurement device may be used for detecting and acquiring the duty cycle corresponding to the current clutch pressure value, and the duty cycle is served as the duty cycle corresponding to the target clutch pressure value. Similarly, during the pressure decreasing phase, the duty cycle of the electronic pump is decreased at the second preset rate, the current clutch pressure value is detected in real time via the pressure sensor, and the difference between the current clutch pressure value and the target clutch pressure value is acquired. When the difference is within the second preset threshold range, for example, the difference is greater than -50 mbar and less than 50 mbar, the duty cycle measurement device may be used for detecting and acquiring the duty cycle corresponding to the current clutch pressure value, and the duty cycle is served as the duty cycle corresponding to the target clutch pressure value.

Exemplarily, assuming that the plurality of target clutch pressure values include the target clutch pressure value 1, the target clutch pressure value 2, ···, and the target clutch pressure value n, and the target clutch pressure value 1 < the target clutch pressure value 2 < ··· < the target clutch pressure value n.

During the pressure increasing phase, a difference 1 between a current clutch pressure value 1 and the target clutch pressure value 1 is acquired, when the difference 1 is greater than -50 mbar and less than 50 mbar, the duty cycle 1 corresponding to the current clutch pressure value 1 is acquired and is served as the duty cycle corresponding to the target clutch pressure value 1. A difference 2 between a current clutch pressure value 2 and the target clutch pressure value 2 is acquired, when the difference 2 is greater than -50 mbar and less than 50 mbar, the duty cycle 2 corresponding to the current clutch pressure value 2 is acquired and is served as the duty cycle corresponding to the target clutch pressure value 2. This process is repeated in the same manner, and a difference n between a current clutch pressure value n and the target clutch pressure value n is acquired, when the difference n is greater than -50 mbar and less than 50 mbar, the duty cycle n corresponding to the current clutch pressure value n is acquired and is served as the duty cycle corresponding to the target clutch pressure value n.

During the pressure decreasing phase, a difference n' between a current clutch pressure value n' and the target clutch pressure value n is acquired, when the difference n' is greater than - 50 mbar and less than 50 mbar, the duty cycle n' corresponding to the current clutch pressure value n' is acquired and is served as the duty cycle corresponding to the target clutch pressure value n. A difference n-1' between a current clutch pressure value n-1' and the target clutch pressure value n-1' is acquired, when the difference n-1' is greater than -50 mbar and less than 50 mbar, the duty cycle n-1' corresponding to the current clutch pressure value n-1' is acquired and is served as the duty cycle corresponding to the target clutch pressure value n-1. This process is repeated in the same manner, and a difference 1' between a current clutch pressure value 1' and the target clutch pressure value 1 is acquired, when the difference 1' is greater than -50 mbar and less than 50 mbar, the duty cycle 1' corresponding to the current clutch pressure value 1' is acquired and is served as the duty cycle corresponding to the target clutch pressure value 1.

In some embodiments, the above control method also includes: during the pressure increasing phase, if the current clutch pressure value reaches a preset maximum pressure value, stopping increasing the duty cycle of the electronic pump. Among them, the preset maximum pressure value is slightly greater than a maximum target clutch pressure value, which may be determined according to actual conditions, and are not limited herein.

Specifically, during the pressure increasing phase, the duty cycle of the electronic pump is increased at the first preset rate, so that the clutch pressure value is gradually rising, and the pressure sensor is used for detecting the current clutch pressure value in real time. When the current clutch pressure value reaches the preset maximum pressure value, stop increasing the duty cycle of the electronic pump, and the current duty cycle is maintained for a period of time. After the clutch pressure value stabilizes, entering the pressure decreasing phase, during which the duty cycle of the electronic pump is decreased at the second preset rate, so that the clutch pressure value is gradually decreased until the clutch pressure value reaches a minimum target clutch pressure value. In this way, the accuracy of the PD curve may be further improved.

In some embodiments, the determining the PD curve based on the target duty cycle corresponding to the plurality of target clutch pressure values includes: acquiring an average value of the duty cycle corresponding to each target clutch pressure value during the pressure increasing phase and the duty cycle corresponding to each target clutch pressure value during the pressure decreasing phase; taking the average value as the target duty cycle corresponding to the current target clutch pressure value; and determining the PD curve based on corresponding relationships between the plurality of target clutch pressure values and the corresponding target duty cycles.

Exemplarily, assuming that when the clutch is in the pressure increasing phase, the target clutch pressure value 1 corresponds to the duty cycle 1, the target clutch pressure value 2 corresponds to the duty cycle 2, ···, and the target clutch pressure value n corresponds to the duty cycle n. When the clutch is in the pressure decreasing phase, the target clutch pressure value 1 corresponds to the duty cycle 1', the target clutch pressure value 2 corresponds to the duty cycle 2', ···, and the target clutch pressure value n corresponds to the duty cycle n'. Then, the target duty cycle 1 corresponding to the target clutch pressure value 1 is an average value of the duty cycle 1 and the duty cycle 1', the target duty cycle 2 corresponding to the target clutch pressure value 2 is an average value of the duty cycle 2 and the duty cycle 2', ···, and the target duty cycle n corresponding to the target clutch pressure value n is an average value of the duty cycle n and the duty cycle n'. In this way, the target duty cycles corresponding to different target clutch pressure values are determined, and the PD curve is obtained by performing the curve fitting on these data.

It should be noted that, after acquiring the target duty cycles corresponding to the plurality of target clutch pressure values, it is also necessary to determine whether the target duty cycle corresponding to each target clutch pressure value is within a reasonable range of a hardware. If the target duty cycle corresponding to each target clutch pressure value is within the reasonable range of the hardware, the PD curve is determined based on corresponding relationships between the plurality of target clutch pressure values and the corresponding target duty cycles, and the PD curve is stored in a non-volatile random-access memory (NVRAM) for subsequent invocation. Otherwise, the target duty cycles corresponding to the plurality of target clutch pressure values need to be reacquired.

In this way, the target duty cycle corresponding to the target clutch pressure value is determined based on the average value of the duty cycle corresponding to each target clutch pressure value during the pressure increasing phase and the duty cycle corresponding to each target clutch pressure value during the pressure decreasing phase, so that the deviations caused by the hysteresis phenomenon during the increase or the decrease of the clutch pressure may be avoided to a certain extent, thereby obtaining a more accurate PD curve.

In some embodiments, the above control method also includes: before entering the pressure increasing phase, controlling the duty cycle of the electronic pump to increase from a first preset duty cycle at a third preset rate; and in a case that the current clutch pressure value is less than a preset pressure threshold, controlling the duty cycle of the electronic pump to decrease to a second preset duty cycle at a fourth preset rate. Among them, the first preset duty cycle, the second preset duty cycle, the third preset rate, the fourth preset rate, and the preset pressure threshold may all be calibrated according to actual conditions, and are not limited herein.

Specifically, before entering the pressure increasing phase, the duty cycle of the electronic pump is controlled to increase from the first preset duty cycle (for example, 20%) at the third preset rate, so that the clutch pressure value gradually increases, and the pressure sensor is used for detecting the clutch pressure value in real time. If it is detected that the clutch pressure value is less than the preset pressure threshold, then the duty cycle of the electronic pump is controlled to decrease to the second preset duty cycle (for example, 10%) at the fourth preset rate, and when the clutch pressure value is stable, entering the pressure increasing phase.

In this way, gas in an oil passage may be emptied. During the pressure increasing phase, the duty cycle may be increased at the first preset rate based on the second preset duty cycle, which allows the clutch pressure value to rapidly reach the minimum target clutch pressure value, thereby improving a pressure increasing speed and saving time.

In some embodiments, the above control method also includes: during the pressure increasing phase, acquiring a rising rate of the clutch pressure value; adjusting the first preset rate when the rising rate is not within a first preset rate range; during the pressure decreasing phase, acquiring a falling rate of the clutch pressure value; and adjusting the second preset rate when the falling rate is not within a second preset rate range.

Specifically, during the pressure increasing phase, it is necessary to use the pressure sensor to detect the clutch pressure value at each time point and calculate the rising rate of the clutch pressure value. When the rising rate is not within the first preset rate range, for example, if the rising rate of the clutch pressure value is excessively large or excessively small, to ensure stability of pressure increase to a certain extent, it is necessary to adjust the first preset rate. For example, if the rising rate of the clutch pressure value is excessively large, then the first preset rate is decreased, and if the rising rate of the clutch pressure value is excessively small, then the first preset rate is increased.

Similarly, during the pressure decreasing phase, it is necessary to use the pressure sensor to detect the clutch pressure value at each time point and calculate the falling rate of the clutch pressure value. When the falling rate is not within the second preset rate range, for example, if the falling rate of the clutch pressure value is excessively large or excessively small, to ensure stability of pressure decrease to a certain extent, it is necessary to adjust the second preset rate. For example, if the falling rate of the clutch pressure value is excessively large, then the second preset rate is decreased, and if the falling rate of the clutch pressure value is excessively small, then the second preset rate is increased.

In this way, stability of the clutch during the pressure increasing phase and the pressure decreasing phase may be ensured to a certain extent, thereby improving the accuracy of the PD curve.

In some embodiments, the above control method also includes: in a case that the vehicle speed is equal to a preset speed threshold and the engine speed is equal to a preset speed threshold, determining that the vehicle speed and the engine speed satisfy the preset condition, where the preset speed threshold is zero.

Specifically, the vehicle speed may be detected and acquired by the vehicle speed sensor disposed close to the wheel, and the engine speed may be detected and acquired by the engine speed sensor. Specific acquisition methods are not limited herein. If the vehicle speed is equal to the preset speed threshold and the engine speed is equal to the preset speed threshold, that is, if both the vehicle speed and the engine speed are equal to zero, then it is determined that the vehicle speed and the engine speed satisfy the preset conditions, and if one or both of the vehicle speed and the engine speed are not equal to zero, then it is determined that the vehicle speed and the engine speed do not satisfy the preset conditions.

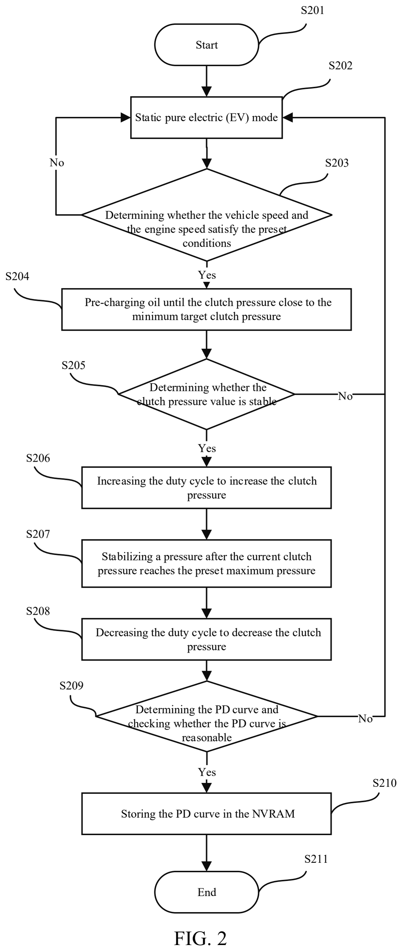

As a specific example, with reference to FIG. 2, the control method for the electronic pump in the embodiments of the present application may also include following steps:
S201: starting.
S202: being in a static pure electric (EV) mode.
S203: determining whether the vehicle speed and the engine speed satisfy the preset conditions. If yes, executing S204; otherwise, executing S202.
S204: pre-charging oil until the clutch pressure close to the minimum target clutch pressure.
S205: determining whether the clutch pressure value is stable. If yes, executing S206; otherwise, executing S202.
S206: increasing the duty cycle to increase the clutch pressure.
S207: stabilizing a pressure after the current clutch pressure reaches the preset maximum pressure.
S208: decreasing the duty cycle to decrease the clutch pressure.
S209: determining the PD curve and checking whether the PD curve is reasonable. If yes, executing S210; otherwise, executing S202.
S210: storing the PD curve in the NVRAM.
S211: ending.

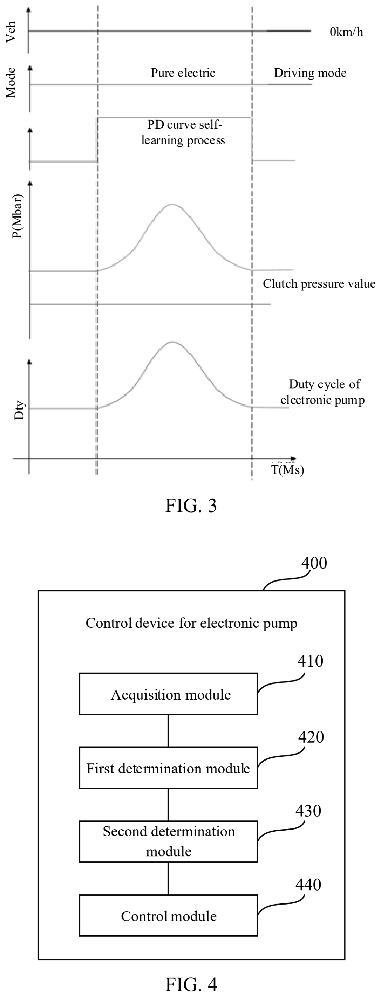

In this way, when the driving mode is the pure electric driving mode and both the vehicle speed and the engine speed are equal to zero, a PD curve self-learning is initiated. A corresponding relationship between the clutch pressure value and the duty cycle of the electronic pump obtained through learning is shown in FIG. 3.

In summary, the control method of the present application is capable of effectively solving the series of drivability problems caused by the inaccuracies in PD curve due to the hardware variations, thereby ensuring the drivability to a certain extent.

Corresponding to the above embodiments, the present application also proposes a control device for an electronic pump.

With reference to FIG. 4, the control device 400 for the electronic pump includes an acquisition module 410, a first determination module 420, a second determination module 430 and a control module 440.

Among them, the acquisition module 410 is configured to acquire duty cycles of the electronic pump corresponding to a plurality of target clutch pressure values at different phases when a vehicle speed and an engine speed satisfy a preset condition. The first determination module 420 is configured to determine a target duty cycle corresponding to each target clutch pressure value based on the duty cycle corresponding to a same target clutch pressure value at the different phases. The second determination module 430 is configured to determine a PD curve based on the target duty cycle corresponding to the plurality of target clutch pressure values. The control module 440 is configured to adjust the duty cycle of the electronic pump based on the PD curve and a preset clutch torque.

According to an embodiment of the present application, the different phases include a pressure increasing phase and a pressure decreasing phase. The acquisition module 410 is specifically configured to: during the pressure increasing phase, increase the duty cycle of the electronic pump at a first preset rate, and when a difference between a current clutch pressure value and the target clutch pressure value is within a first preset threshold range, take a duty cycle corresponding to the current clutch pressure value as the duty cycle corresponding to the target clutch pressure value; and during the pressure decreasing phase, decrease the duty cycle of the electronic pump at a second preset rate, when the difference between the current clutch pressure value and the target clutch pressure value is within a second preset threshold range, take the duty cycle corresponding to the current clutch pressure value as the duty cycle corresponding to the target clutch pressure value.

According to an embodiment of the present application, during the pressure increasing phase, if the current clutch pressure value reaches a preset maximum pressure value, stopping increasing the duty cycle of the electronic pump.

According to an embodiment of the present application, the second determination module 430 is specifically configured to: acquire an average value of the duty cycle corresponding to each target clutch pressure value during the pressure increasing phase and the duty cycle corresponding to each target clutch pressure value during the pressure decreasing phase; take the average value as the target duty cycle corresponding to the current target clutch pressure value; and determine the PD curve based on corresponding relationships between the plurality of target clutch pressure values and the corresponding target duty cycles.

According to an embodiment of the present application, before entering the pressure increasing phase, the duty cycle of the electronic pump is controlled to increase from a first preset duty cycle at a third preset rate; and in a case that the clutch pressure value is less than a preset pressure threshold, the duty cycle of the electronic pump is controlled to decrease to a second preset duty cycle at a fourth preset rate.

According to an embodiment of the present application, during the pressure increasing phase, a rising rate of the clutch pressure value is acquired; when the rising rate is not within a first preset rate range, the first preset rate is adjusted; during the pressure decreasing phase, a falling rate of the clutch pressure value is acquired; and when the falling rate is not within a second preset rate range, the second preset rate is adjusted.

According to an embodiment of the present application, in a case that the vehicle speed is equal to a preset speed threshold and the engine speed is equal to a preset speed threshold, the vehicle speed and the engine speed are determined to satisfy the preset condition, where the preset speed threshold is zero.

It should be noted that the explanation regarding the embodiments and beneficial effects of the control method for the electronic pump is also adopted to the control device for the electronic pump provided in the embodiments of the present application. To avoid redundancy, it will not be detailed herein.

Corresponding to the above embodiments, the present application also proposes a computer-readable storage medium.

A control program for the electronic pump is stored in the computer-readable storage medium of the present application. When the control program for the electronic pump is executed by a processor, the aforementioned control method for the electronic pump is implemented.

It should be noted that, the explanation regarding the embodiments and the beneficial effects of the control method for the electronic pump is also adopted to the computer-readable storage medium provided in the embodiments of the present application. To avoid redundancy, it will not be detailed herein.

Corresponding to the above embodiments, the present application also proposes a vehicle.

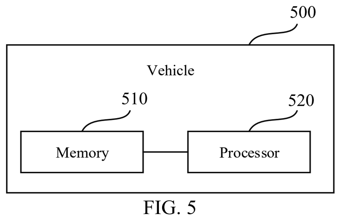

As shown in FIG. 5, the vehicle 500 of the present application includes a memory 510, a processor 520, and a control program for an electronic pump stored in the memory 510 and executable on the processor 520. When the control program for the electronic pump is executed by the processor, the aforementioned control method for the electronic pump is implemented.

It should be noted that the explanation regarding the embodiments and beneficial effects of the control method for the electronic pump is also adopted to the vehicle 500 provided in the embodiments of the present application. To avoid redundancy, it will not be detailed herein.

It should be noted that, logic and/or steps shown in a flowchart or described in other ways herein, for example, may be considered as a sequenced list of executable instructions for implementing logical functions, which may be specifically implemented in any computer-readable medium for using by a instruction execution system, a device, or an apparatus (such as a computer-based system, a system including a processor, or other systems that may fetch and execute instructions from the instruction execution system, the device, or the apparatus), or used in combination with these instruction execution system, devices, or apparatus. In view of this specification, the "computer-readable medium" may be any device that may contain, store, communicate, propagate, or transmit a program for using by the instruction execution system, the devices, or the apparatus or device used in combination with these instruction execution system, devices, or apparatus. More specific examples (a non-exhaustive list) of the computer-readable media include following: an electrical connection component (an electronic device) with one or more wires, a portable computer disk cartridge (a magnetic device), a random-access memory (RAM), a read-only memory (ROM), an erasable programmable read-only memory (EPROM or a flash memory), a fiber optic device, and a portable compact disc read-only memory (CD-ROM). In addition, the computer-readable medium may even be paper or other suitable medium on which the program is printed, because the program may be electronically obtained, for example, by optically scanning the paper or other medium, followed by editing, interpreting, or, if necessary, processing in other suitable ways, and then is stored in a computer memory.

It should be understood that, various portions of the present application may be implemented in a hardware, a software, a firmware, or a combination thereof. In the above embodiments, a plurality of steps or methods may be implemented by the software stored in the memory and executed by a suitable instruction execution system or the firmware. For example, if it is implemented by the hardware, as in another embodiment, it may be implemented by using any one or a combination of following techniques well known in the art: a discrete logic circuit with a logic gate circuit for implementing a logical function on a data signal, an application-specific integrated circuit with a suitable combinational logic gate circuit, a programmable gate array (PGA), a field-programmable gate array (FPGA), or the like.

In this specification, description referring to terms such as "one embodiment", "some embodiments", "example", "specific example", or "some examples" mean that a specific feature, structure, material, or characteristic described in connection with the embodiment or example are included in at least one embodiment or example of the present application. In this specification, illustrative description of the above terms does not necessarily refer to a same embodiment or example. Moreover, the described specific features, structures, materials, or characteristics may be combined in any suitable manner in one or more embodiments or examples.

In addition, terms "first" and "second" are merely used for illustrating purposes, and should not be understood as indicating or implying relative importance or implicitly indicating the quantity of technical features indicated. Therefore, features defined with "first" and "second" may explicitly or implicitly include at least one of the features. In the description of the present application, "a plurality of" means at least two, such as two, three, or the like, unless otherwise specifically defined.

In the present application, unless otherwise clearly specified and defined, terms such as "installation", "connected", "communicate", "fixed" should be understood broadly. For example, they may be a fixed connection, a detachable connection, or an integral connection; or they may be a mechanical connection or an electrical connection; or they may be a direct connection or an indirect connection through an intermediate medium, or an internal connection of two components or an interaction relationship between two components, unless otherwise clearly defined. For those with ordinary skill in the art, specific meaning of the above terms in the present application is understood according to specific situations.

Although the embodiments of the present application are shown and described above, it should be understood that the above embodiments are exemplary, and should not be construed as limiting the present application. Those with ordinary skill in the art can make changes, modifications, substitutions, and variations to the above embodiments within the scope of the present application.

## Claims

1. A control method for an electronic pump, comprising:
in a case that a vehicle speed and an engine speed satisfy a preset condition, acquiring (S110) duty cycles of the electronic pump corresponding to a plurality of target clutch pressure values at different phases of a clutch;
determining (S120) a target duty cycle corresponding to each target clutch pressure value based on the duty cycles corresponding to a same target clutch pressure value at the different phases;
determining (S130) a pressure duty cycle (PD) curve based on the target duty cycles corresponding to the plurality of target clutch pressure values; and
adjusting (S140) the duty cycle of the electronic pump based on the PD curve and a preset clutch torque.

2. The control method for the electronic pump according to claim 1, wherein the different phases comprise a pressure increasing phase, and the acquiring the duty cycles of the electronic pump corresponding to the plurality of target clutch pressure values at the different phases of the clutch comprises:
during the pressure increasing phase, increasing the duty cycle of the electronic pump at a first preset rate, and when a difference between a current clutch pressure value and the target clutch pressure value is within a first preset threshold range, taking a duty cycle corresponding to the current clutch pressure value as the duty cycle corresponding to the target clutch pressure value.

3. The control method for the electronic pump according to claim 2, wherein the first preset threshold range is greater than -50 mbar and less than 50 mbar.

4. The control method for the electronic pump according to claim 2 or claim 3, wherein the different phases comprise a pressure decreasing phase, and the acquiring the duty cycles of the electronic pump corresponding to the plurality of target clutch pressure values at the different phases of the clutch comprises:
during the pressure decreasing phase, decreasing the duty cycle of the electronic pump at a second preset rate, and when the difference between the current clutch pressure value and the target clutch pressure value is within a second preset threshold range, taking the duty cycle corresponding to the current clutch pressure value as the duty cycle corresponding to the target clutch pressure value.

5. The control method for the electronic pump according to claim 4, wherein the second preset threshold range is greater than -50 mbar and less than 50 mbar.

6. The control method for the electronic pump according to claim 4 or claim 5, further comprising:
during the pressure increasing phase, if the current clutch pressure value reaches a preset maximum pressure value, stopping increasing the duty cycle of the electronic pump.

7. The control method for the electronic pump according to claim 6, further comprising:
after stopping increasing the duty cycle of the electronic pump, maintaining a current duty cycle of the electronic pump for a first period of time to stabilize the clutch pressure value, and then entering the pressure decreasing phase.

8. The control method for the electronic pump according to any one of claims 4 to 7, wherein the determining the PD curve based on the target duty cycles corresponding to the plurality of target clutch pressure values comprises:
acquiring an average value of the duty cycle corresponding to each target clutch pressure value during the pressure increasing phase and the duty cycle corresponding to each target clutch pressure value during the pressure decreasing phase;
taking the average value as the target duty cycle corresponding to the current target clutch pressure value; and
determining the PD curve based on corresponding relationships between the plurality of target clutch pressure values and the corresponding target duty cycles.

9. The control method for the electronic pump according to any one of claims 4 to 8, further comprising:
before entering the pressure increasing phase, controlling the duty cycle of the electronic pump to increase from a first preset duty cycle at a third preset rate; and
in a case that the current clutch pressure value is less than a preset pressure threshold, controlling the duty cycle of the electronic pump to decrease to a second preset duty cycle at a fourth preset rate.

10. The control method for the electronic pump according to any one of claims 4 to 9, further comprising:
during the pressure increasing phase, acquiring a rising rate of the clutch pressure value; and
adjusting the first preset rate when the rising rate is not within a first preset rate range.

11. The control method for the electronic pump according to any one of claims 4 to 10, further comprising:
during the pressure decreasing phase, acquiring a falling rate of the clutch pressure value; and
adjusting the second preset rate when the falling rate is not within a second preset rate range.

12. The control method for the electronic pump according to any one of claims 1 to 11, further comprising:
in a case that the vehicle speed is equal to a preset speed threshold and the engine speed is equal to a preset speed threshold, determining that the vehicle speed and the engine speed satisfy the preset condition, wherein the preset speed threshold is zero.

13. The control method for the electronic pump according to any one of claims 1 to 12, further comprising:
after obtaining the target duty cycles corresponding to the plurality of target clutch pressure values, determining whether the target duty cycle corresponding to each target clutch pressure value is within a reasonable range of a hardware; and
if the target duty cycle corresponding to each target clutch pressure value is within the reasonable range of the hardware, determining the PD curve the based on a relationship between the plurality of target clutch pressure values and the corresponding target duty cycles.

14. A computer-readable storage medium storing a control program for an electronic pump, wherein when the control program for the electronic pump is executed by a processor, the control method for the electronic pump according to any one of claims 1 to 13 is implemented.

15. A vehicle (500) comprising a memory (510), a processor (520), and a control program for an electronic pump stored in the memory (510) and executable on the processor (520), wherein when the control program for the electronic pump is executed by the processor (520), the control method for the electronic pump according to any one of claims 1 to 13 is implemented.
